# FASCICULE DE BREVET EUROPEEN

(11) **EP 1 925 187 B1**
(45) Date de publication et mention de la délivrance du brevet: **11.08.2010**
(21) Numéro de dépôt: 06793531.2
(22) Date de dépôt: 14.09.2006
(51) Int. Cl.: H05B 6/24, H05B 6/36, C03B 5/02

(54) **FOUR DE FUSION A DISPOSITIF INDUCTEUR A UNE SEULE SPIRE COMPOSE D'UNE PLURALITE DE CONDUCTEURS**
SCHMELZOFEN MIT EINER AUS MEHREREN LEITERN BESTEHENDEN INDUKTIVEN EINZELWINDUNGSEINRICHTUNG
MELTING FURNACE WITH SINGLE-TURN INDUCTIVE DEVICE CONSISTING OF A PLURALITY OF CONDUCTORS

(30) Priorité: 15.09.2005 FR 0552783
(43) Date de publication de la demande: 28.05.2008
(73) Titulaire: Commissariat à l'Énergie Atomique et aux Énergies Alternatives, 75015 Paris (FR); Areva NC, 75009 Paris (FR)
(72) Inventeur: LADIRAT, Christian, F-30126 Saint-Laurent des Arbres (FR)
(74) Mandataire: Poulin, Gérard
(86) Numéro de dépôt international: PCT/EP2006/066380
(87) Numéro de publication internationale: WO 2007/031564

(56) Documents cités:
- FR-A- 641 071
- US-A- 1 872 990
- US-A- 4 471 488

## Description

Le sujet de l'invention est un four de fusion comprenant un dispositif inducteur composé d'une pluralité de conducteurs.

Dans certains fours de fusion utilisés pour fondre les verres ou d'autres matières réfractaires, un creuset enfermant le bain de fusion est entouré d'un dispositif inducteur constitué d'une seule spire qui apporte la chaleur nécessaire. Une telle configuration à spire unique, c'est-à-dire s'étendant sur une seule circonférence du creuset, peut apparaître nécessaire quand des tensions de fréquences très élevées, de plusieurs centaines de kilohertz, doivent être appliquées, pour limiter la valeur des ces fréquences. Les dispositifs inducteurs a spires multiples, souvent composées d'un conducteur unique, sont toutefois beaucoup plus répandus. Le dispositif inducteur à spire unique comprend un conducteur unique annulaire continu entre deux bornes électriques proches l'une de l'autre, ou, en variante, une pluralité de conducteurs parallèles et superposés sur la hauteur du creuset et s'étendant chacun entre les deux bornes, auxquelles ils sont reliés par des collecteurs.

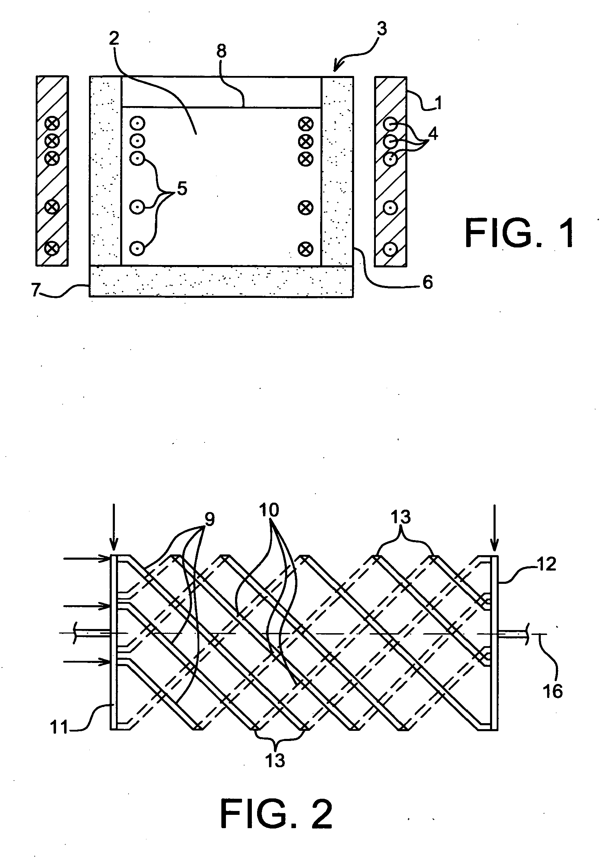

Le bon fonctionnement du four est mis en échec dans certaines circonstances. Des produits à fondre sont beaucoup plus conducteurs à haute température qu'à basse température. On observe alors le phénomène représenté à la figure 1 : le conducteur 1 est parcouru par un courant dont la densité est hétérogène, beaucoup plus grande en face des régions chaudes de la charge 2 jetée dans le creuset 3 (ici la région supérieure), où se développent des courants antagonistes plus importants. Les lignes de courant ont la référence 4 dans le conducteur 1 et la référence 5 dans la charge 2. La région la plus chaude de la charge 2 est donc celle qui est soumise encore à un échauffement plus important. La conduction dans la charge 2 est souvent impuissante à y égaliser la température, ce qui entretient le déséquilibre thermique et rend impossible le chauffage suffisant de la région la plus froide. La situation est la même quand le dispositif inducteur comprend une pluralité de conducteurs parallèles superposés au lieu du conducteur 1 unique qu'on a représenté ici par commodité, puisque le courant entre préférentiellement dans les conducteurs où il circule le plus facilement en quittant le collecteur. Cette difficulté est si grave que l'emploi des inducteurs à spire unique a été restreint.

L'invention a pour objet d'obvier à cette difficulté de chauffage uniforme spécifique aux inducteurs à spire unique et surtout à pluralité de conducteurs parallèles. Elle concerne un four de fusion comprenant un creuset, un dispositif inducteur entourant le creuset et composé d'une pluralité de conducteurs parallèles ayant l'extension d'une spire ou d'une circonférence, **caractérisé en ce que** les conducteurs parallèles s'étendent en forme d'ondes de longueurs identiques et comprennent chacun au moins une portion descendante et au moins une portion montante, les portions montantes étant disposées dans une première nappe et les portions descendantes dans une seconde nappe, les nappes étant concentriques autour du creuset.

Tous les conducteurs s'étendent ainsi chacun à différentes altitudes et devant des portions plus ou moins chaudes et plus ou moins conductrices de la charge fondue quand elle en comporte, ce qui uniformise la facilité pour le courant de les traverser et donc la densité du courant dans chacun d'eux. Cela est encore plus manifeste si les conducteurs s'étendent tous entre deux hauteurs extrêmes identiques délimitant une région de chauffage du creuset, puisque leur hauteur moyenne est alors la même.

US 1 872 990 décrit un dispositif à conducteur apparemment unique et à spires multiples inclinées pour susciter des mouvements et des courants secondaires particuliers dans le bain fondu, et US 4 471 488 décrit un autre dispositif à conducteur unique et spires multiples en double couche pour accroître la puissance d'induction. Il y est souligné que les inducteurs à spire unique sont désavantageux et que ce brevet antérieur ne les concerne donc pas.

Une construction simple est obtenue si les portions montantes et descendantes sont hélicoïdales et assemblées par des entretoises conductrices d'espacement des nappes. Enfin, dans le cas fréquent où les conducteurs sont creusés de canaux de refroidissement traversant aussi les entretoises, les portions montantes et descendantes sont des tubes bouchés aux extrémités, mais munis d'orifices latéraux adjacents aux extrémités.

L'invention sera maintenant décrite en détail en liaison aux figures :
- la figure 1 représente le problème associé à la technique antérieure,
   et les autres figures illustrent l'invention,
- la figure 2 représentant schématiquement le dispositif inducteur étalé sur un plan (une partie seulement des conducteurs est représentée, le nombre de conducteurs étant adapté à chaque cas),
- la figure 3 représentant un coude entre deux portions d'inclinaisons opposées des conducteurs,
- et la figure 4 étant une vue d'ensemble du dispositif inducteur.

La figure 1 représente donc un creuset 3, pouvant être refroidi ou non, composé d'une paroi latérale 6 cylindrique et d'une sole 7 inférieure. Le conducteur 1 est normalement refroidi, par un circuit de liquide bien qu'on ne l'ait pas représenté, et forme un anneau autour de la paroi latérale 6. La charge 2 comprend souvent des ingrédients jetés à des instants différents, ce qui fait apparaître le problème de températures différentes à des régions de hauteurs différentes. Il arrive aussi souvent qu'un chauffage préliminaire de la charge 2 soit entrepris à la surface supérieure 8, en y formant la région la plus chaude. De tels fours à induction sont couramment employés pour la vitrification de certains déchets nucléaires.

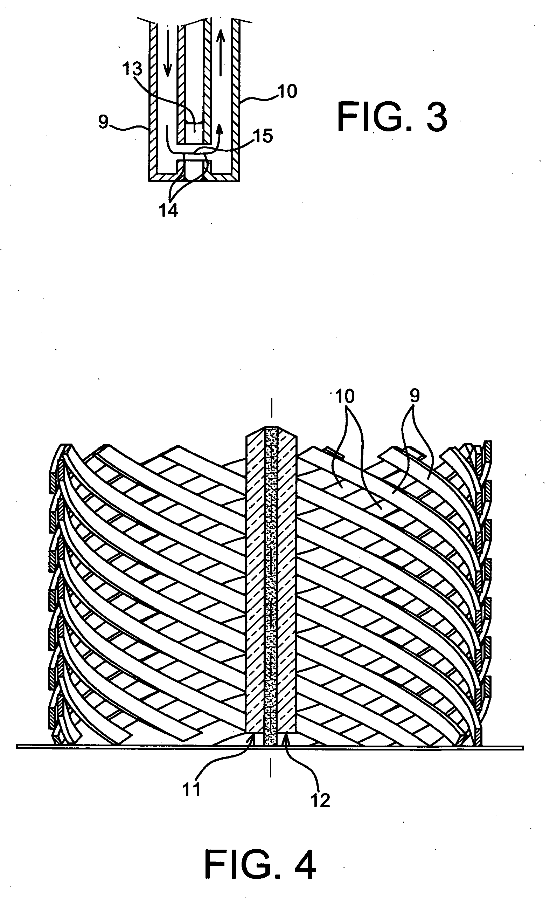

Dans l'invention (figures 2 et 4), chacun des conducteurs est en forme d'onde de longueur identique et comprend au moins une portion descendante 9 et une portion montante 10 successives entre un collecteur d'entrée 11 d'eau de refroidissement et d'électricité et un collecteur de sortie 12. Les conducteurs s'étendent chacun sur une spire circulaire. Comme les conducteurs s'étendent tous de préférence entre une hauteur extrême supérieure et une hauteur extrême inférieure, et qu'on préfère de ne pas les allonger à l'excès afin de limiter les pertes électriques, ils comprennent en général une seule portion montante 10 ou une seule portion descendante 9 médiane, s'étendant entre les deux hauteurs extrêmes, et deux portions plus courtes de l'autre espèce reliant chacune une extrémité de la portion médiane à l'un des collecteurs 11 ou 12. La hauteur de raccordement des deux extrémités des conducteurs est identique sur les collecteurs 11 et 12. La répartition de l'ensemble des conducteurs est telle qu'il existe un axe 16 de symétrie de rotation sur le plan développé présenté sur la figure 2 ; une rotation du réseau de conducteurs autour de cet axe 16, horizontal à mi-hauteur, amènerait à un réseau de conducteurs semblable. La représentation en développé montre que les portions 9 et 10 des conducteurs sont favorablement en hélice de manière à rester à un pas uniforme. Les raccordements entre portions descendantes 9 et montantes 10 aux hauteurs extrêmes forment des angles. Les portions descendantes 9 et montantes 10 y sont raccordées par des entretoises 13 également conductrices, en cuivre par exemple, qui leur sont soudées. Les conducteurs et les collecteurs 11 et 12 sont creusés de canaux de refroidissement, et les portions descendantes 9 et montantes 10 sont tubulaires. Les tubes sont bouchés aux extrémités et la communication aux raccordements se fait par des orifices latéraux 14 adjacents aux extrémités qui débouchent dans des canaux 15 traversant les entretoises 13 (figure 3). Une fonction des entretoises 13 est d'établir une séparation entre deux nappes conductrices, l'une formée de toutes les portions descendantes 9, l'autre de toutes les portions montantes 10, qui sont concentriques autour du creuset 2, à des distances différentes de la paroi latérale 6. Les courts-circuits entre conducteurs différents sont ainsi évités.

## Revendications

1. Four de fusion comprenant un creuset (2), un dispositif inducteur entourant le creuset et composé d'une pluralité de conducteurs parallèles s'étendant sur une spire unique et reliés à un collecteur commun (11, 12), **caractérisé en ce que** les conducteurs parallèles s'étendent en forme d'onde de longueur identique et comprennent chacun au moins une portion descendante (9) et au moins une portion montante (10), les portions montantes étant disposées dans une première nappe et les portions descendantes dans une seconde nappe, les nappes étant concentriques autour du creuset.

2. Four de fusion selon la revendication 1, **caractérisé en ce que** les conducteurs s'étendent tous entre deux hauteurs extrêmes identiques qui délimitent une région de chauffage du creuset.

3. Four de fusion selon la revendication 1 ou 2, **caractérisé en ce que** les portions montantes et descendantes sont hélicoïdales et assemblées par des entretoises (13) conductrices d'espacement des nappes.

4. Four de fusion selon la revendication 3, **caractérisé en ce que** les conducteurs sont creusés de canaux traversant les entretoises et les portions montantes et descendantes, et les portions montantes et descendantes sont munies d'orifices latéraux (14) adjacents aux extrémités qui débouchent dans les canaux (15) des entretoises.

## Claims

1. A melting furnace comprising a crucible (2), an inductor device surrounding the crucible and consisting of a plurality of parallel conductors extending over a single loop and connected to a common collector (11, 12), **characterized in that** the parallel conductors extend as a wave with identical length and each comprise at least one descending portion (9) and at least one ascending portion (10), the ascending portions being positioned in a first layer and the descending portions in a second layer, the layers being concentric around the crucible.

2. The melting furnace according to claim 1, **characterized in that** the conductors all extend between two identical extreme heights which delimit a region for heating the crucible.

3. The melting furnace according to claim 1 or 2, **characterized in that** the ascending and descending portions are helical and assembled with conductive spacers (13) for spacing out the layers.

4. The melting furnace according to claim 1, **characterized in that** the conductors are grooved with channels crossing through the spacers, and the ascending and descending portions are provided with side orifices (14) adjacent to the ends, which open out into the channels (15) of the spacers.

## Patentansprüche

1. Schmelzofen mit einem Tiegel (2) und einer den Tiegel umringenden induktiven Einrichtung, gebildet durch eine Vielzahl sich über eine einzige Windung erstreckender und mit einem gemeinsamen Kollektor (11, 12) verbundener paralleler Leiter,
**dadurch gekennzeichnet, dass** die parallelen Leiter sich in Form von Wellen identischer Länge erstrecken und jeder wenigstens einen Abwärtsabschnitt (9) und wenigstens einen Aufwärtsabschnitt (10) umfasst, wobei sich die Aufwärtsabschnitte in einer ersten Lage befinden und die Abwärtsabschnitte in einer zweiten Lage, und diese Lagen um den Tiegel herum konzentrisch sind.

2. Schmelzofen nach Anspruch 1, **dadurch gekennzeichnet, dass** sich die Leiter alle zwischen zwei identischen extremen Höhen erstrecken, die einen Heizbereich des Tiegels begrenzen.

3. Schmelzofen nach Anspruch 1 oder 2, **dadurch gekennzeichnet, dass** die Aufwärts- und Abwärtsabschnitte spiralförmig sind und zusammengebaut mittels leitfähigen Abstandshaltern (13) der Lagen.

4. Schmelzofen nach Anspruch 3, **dadurch gekennzeichnet, dass** die Leiter Kanäle enthalten, welche die Abstandshalter und die Aufwärts- und Abwärtsabschnitte durchqueren und die Aufwärts- und Abwärtsabschnitte dabei seitliche Öffnungen (14) umfassen, die an die Enden angrenzen, die in die Kanäle (15) der Abstandshalter münden.
